# EUROPEAN PATENT APPLICATION

(11) **EP 4 734 212 A1**
(43) Date of publication of application: **29.04.2026**
(21) Application number: 25206080.1
(22) Date of filing: 01.10.2025
(51) Int. Cl.: H01M 10/0562

(54) **POSITIVE ELECTRODE FOR ALL-SOLID-STATE BATTERY, ALL-SOLID-STATE BATTERY INCLUDING THE SAME, AND METHOD OF MANUFACTURING THE SAME**

(30) Priority: 02.10.2024 KR 20240133889
(71) Applicant: SAMSUNG SDI CO., LTD., Yongin-si, Gyeonggi-do 17084 (KR)
(72) Inventor: KANG, Dongwoo, 17084 Yongin-si, Gyeonggi-do (KR); KIM, Jinhee, 17084 Yongin-si, Gyeonggi-do (KR); YOU, Hoseon, 17084 Yongin-si, Gyeonggi-do (KR); OH, Daeyang, 17084 Yongin-si, Gyeonggi-do (KR); KIM, MyungSeop, 17084 Yongin-si, Gyeonggi-do (KR)
(74) Representative: Michalski Hüttermann & Partner Patentanwälte mbB

(57) **Abstract**

Disclosed are positive electrodes and all-solid-state batteries including positive electrodes. A positive electrode includes a positive electrode current collector, and a positive electrode active material layer on the positive electrode current collector. The positive electrode active material layer includes a positive electrode active material and a solid electrolyte. The positive electrode active material layer includes a surface section and a deep section. An amount of lithium impurities in the surface section is greater than an amount of lithium impurities in the deep section. The amount of lithium impurities in the surface section is in a range of ≥ 300 ppm to ≤ 700 ppm.

## Description

### CROSS-REFERENCE TO RELATED APPLICATION

This application claims priority to Korean Patent Application No. 10-2024-0133889 filed on October 2, 2024 in the Korean Intellectual Property Office.

### BACKGROUND

The present disclosure relates to a positive electrode for an all-solid-state battery, an all-solid-state battery including the positive electrode, and a method of manufacturing the positive electrode.

With increasing presence of battery-using electronic devices, such as, e.g., mobile phones, laptop computers, electric vehicles, and the like, there is a rapidly increasing demand for rechargeable batteries with high energy density and high capacity. Therefore, improving performance of rechargeable lithium batteries may be advantageous.

An all-solid-state battery may include a solid electrolyte in place of a liquid electrolyte. As an all-solid-state battery does not use a flammable organic dispersion medium, the possibility of fire or explosion may be significantly reduced even in the event of short-circuit. Accordingly, an all-solid-state battery may significantly increase safety as compared to a lithium ion battery using a liquid electrolyte.

### SUMMARY

An example embodiment of the present disclosure includes a positive electrode for an all-solid-state battery with desired or improved ionic conductivity in a limited volume.

An example embodiment of the present disclosure includes a method of manufacturing a positive electrode for an all-solid-state battery that has low fabrication complexity and that enables mass production.

According to an example embodiment of the present disclosure, a positive electrode for an all-solid-state battery may include a positive electrode current collector, and a positive electrode active material layer on the positive electrode current collector. The positive electrode active material layer may include a positive electrode active material and a solid electrolyte. The positive electrode active material layer may include a surface section and a deep section. An amount of lithium impurities in the surface section may be greater than an amount of lithium impurities in the deep section. The amount of lithium impurities in the surface section may be in a range of≥ 300 ppm to ≤ 700 ppm.

According to an example embodiment of the present disclosure, an all-solid-state battery may include a positive electrode, a negative electrode, and a solid electrolyte layer between the positive electrode and the negative electrode. The positive electrode may include a positive electrode current collector, and a positive electrode active material layer on the positive electrode current collector. The positive electrode active material layer may include a positive electrode active material and a solid electrolyte. A surface of the positive electrode active material layer may include a passivation pattern on at least one side of the surface of the positive electrode active material layer. An amount of lithium impurities in the passivation pattern may be greater than an amount of lithium impurities on the surface of the positive electrode active material layer.

According to an example embodiment of the present disclosure, a method of manufacturing a positive electrode for an all-solid-state battery may include mixing a positive electrode active material, a conductive material, a binder, and a solid electrolyte to prepare a positive electrode slurry, coating and drying on a positive electrode current collector the positive electrode slurry to form a positive electrode active material layer, cutting a passivation layer of the positive electrode active material layer, and pressing the positive electrode current collector and the positive electrode active material layer where the passivation layer is cut. The passivation layer may include a lithium impurity produced from a reaction between atmosphere and the solid electrolyte in the positive electrode active material layer.

### BRIEF DESCRIPTION OF DRAWINGS

FIG. 1 is a cross-sectional view illustrating an all-solid-state battery according to an example embodiment of the present disclosure.
FIG. 2 is a cross-sectional view illustrating an all-solid-state battery according to an example embodiment of the present disclosure.
FIGS. 3 and 4 are respective plan and cross-sectional views illustrating an all-solid-state battery according to an example embodiment of the present disclosure.
FIG. 5 is a cross-sectional view illustrating a positive electrode for an all-solid-state battery according to an example embodiment of the present disclosure.
FIG. 6 is a cross-sectional view illustrating a positive electrode active material layer for an all-solid-state battery according to an example embodiment of the present disclosure.
FIGS. 7 and 8 are enlarged views respectively illustrating sections M1 and M2 depicted in FIG. 6.
FIGS. 9A and 9B are conceptual diagrams illustrating a passivation layer according to an example embodiment of the present disclosure.
FIG. 10 is a conceptual diagram illustrating cutting of a passivation layer according to an example embodiment of the present disclosure.
FIGS. 11 and 12 diagrams illustrating a passivation pattern according to an example embodiment of the present disclosure.
FIG. 13 is a flow chart illustrating a method of manufacturing a positive electrode for an all-solid-state battery according to an example embodiment of the present disclosure.

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present between therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings as examples are used to disclose specific shapes but not limited to the scope of the present disclosure. It is understood that, although the terms "first", "second", "third", and the like, may be used herein to describe various elements, these elements should not be limited by these terms. These terms are only used to distinguish one element from another element. The example embodiments explained and illustrated herein include complementary embodiments thereof.

The terms in this description are merely used to describe various embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and an average particle diameter (D₅₀) value may then be obtained through a calculation. In another example, a laser scattering method may be utilized to measure the average particle diameter (D₅₀). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and an average particle diameter (D₅₀) is then calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

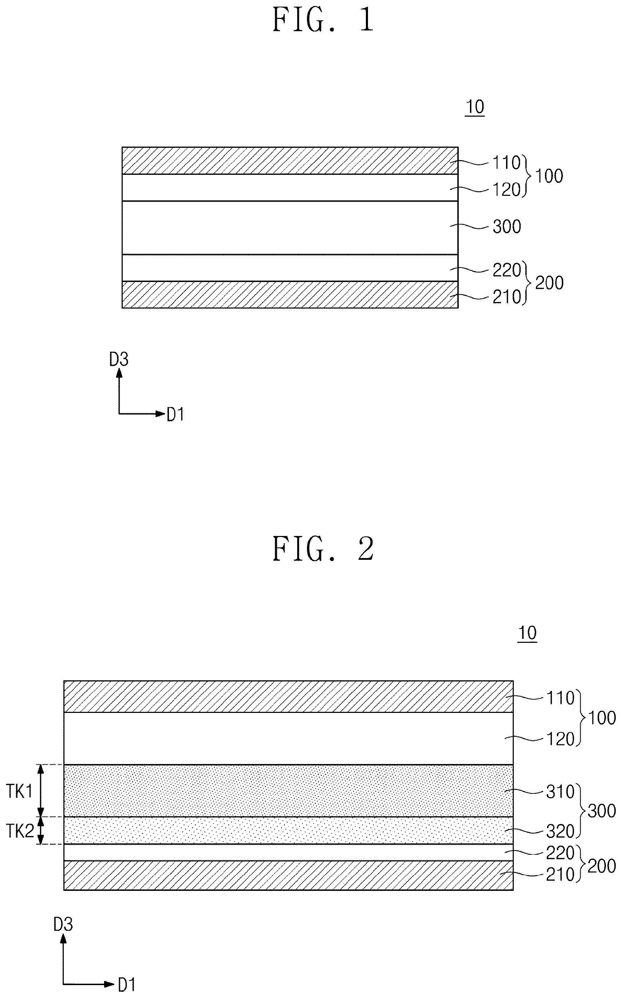

FIG. 1 is a cross-sectional view illustrating an all-solid-state battery 10 according to an example embodiment of the present disclosure.

Referring to FIG. 1, the all-solid-state battery 10 may include a positive electrode 100, a negative electrode 200 opposite to the positive electrode 100, and a solid electrolyte layer 300 disposed between the positive electrode 100 and the negative electrode 200. The present disclosure, however, is not limited thereto, and the all-solid-state battery 10 may further include an additional functional layer, such as an adhesion enhancement layer, disposed between the positive electrode 100 and the solid electrolyte layer 300, or between the negative electrode 200 and the solid electrolyte layer 300.

The positive electrode 100 may include a positive electrode current collector 110, and a positive electrode active material layer 120 disposed on the positive electrode current collector 110. The positive electrode active material layer 120 may include a positive electrode active material, a solid electrolyte, a conductive material, and a binder.

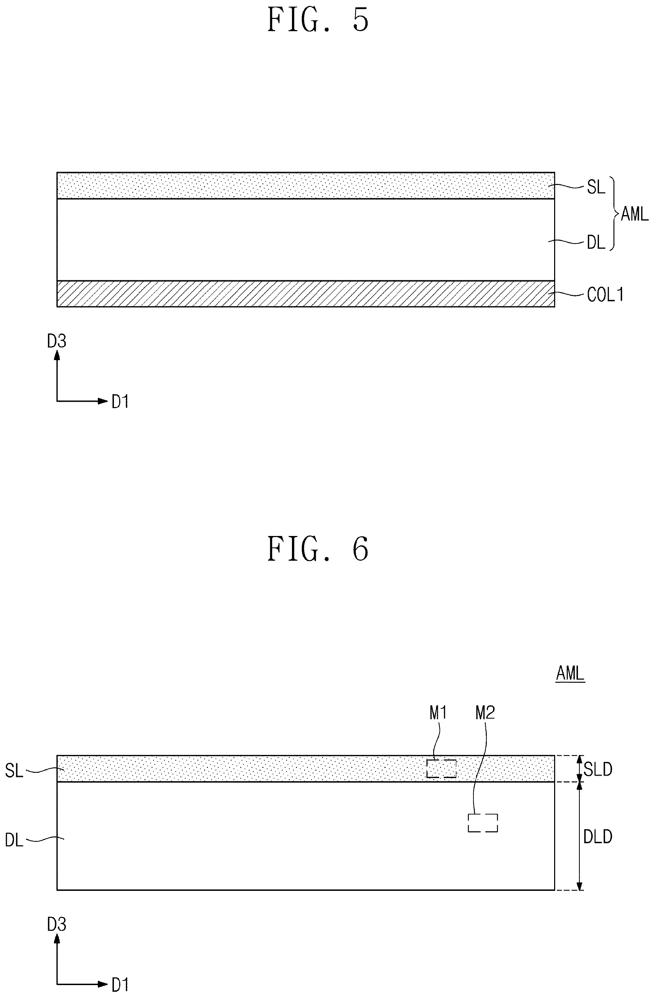

The positive electrode current collector 110 may provide a reference surface on which the positive electrode active material layer 120 is disposed. The positive electrode current collector 110 may have a plate or foil shape. For example, the positive electrode current collector 110 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 110 of FIG. 1 may be substantially the same as, or similar to, a positive electrode current collector COL1 which is discussed with reference to FIG. 5.

In another example embodiment of the present disclosure, the positive electrode current collector 110 may be omitted. Although not shown, to increase adhesion between the positive electrode current collector 110 and the positive electrode active material layer 120, a carbon layer having a thickness in a range of ≥ 0.1 µm to ≤ 4 µm may further be disposed between the positive electrode current collector 110 and the positive electrode active material layer 120.

The positive electrode active material may include a material that can reversibly absorb and desorb lithium ions. For example, the positive electrode active material may include at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by at least one of LiₐA_{1-b}B_{b}D₂ (where 0.90 ≤ a ≤ 1 and 0 ≤ b ≤ 0.5), LiₐE_{1-b}B_{b}O_{2-c}D_{c} (where 0.90≤ a ≤ 1, 0≤ b ≤ 0.5, and 0 ≤ c ≤ 0.05), LiE_{2-b}B_{b}O_{4-c}D_{c}(where 0 ≤ b ≤ 0.5 and 0 ≤ c ≤ 0.05), LiₐNi_{1-b-c}Co_{b}B_{c}D_{α} (where 0.90≤ a ≤ 1, 0≤b≤0.5, 0 ≤ c ≤ 0.05, and 0<α<2), LiₐNi_{1-b-c}Co_{b}B_{c}O_{2-α}F_{α} (where 0.90≤a≤1, 0≤b≤0.5, 0≤c≤0.05, and 0<α<2), LiₐNi_{1-b-c}Mn_{b}B_{c}D_{α} (where 0.90 ≤ a ≤ 1, 0 ≤ b ≤ 0.5, 0 ≤ c≤ 0.05, and 0< α ≤ 2), LiₐNi_{1-b-c}Mn_{b}B_{c}O_{2-α}F_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001 ≤ d≤0.1), LiₐNi_{b}Co_{c}Mn_{d}GₑO₂ (where 0.90≤a≤1, 0≤b≤0.9, 0≤c≤0.5, 0≤d≤0.5, and 0.001 ≤ e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1), LiₐMnG_{b}O₂ (where 0.90≤a≤1 and 0.001 ≤b≤0.1), LiₐMn₂G_{b}O₄ (where 0.90≤a≤1 and 0.001 ≤b≤0.1), QO₂, QS₂, LiQS₂, V₂O₅, LiV₂O₅, LiIO₂, LiNiVO₄, Li_{3-f}J₂(PO₄)₃ (where 0 ≤ f≤ 2), Li_{3-f}Fe₂(PO₄)₃ (where 0≤f≤2), and LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of a transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of or including cations and anions are arranged displaced from each other by 1/2 of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material includes a ternary lithium transition metal oxide having the layered rock salt type structure, the all-solid-state battery 10 may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be any method that does not adversely affect physical characteristics of the positive electrode active material. The method of forming the coating layer may include, for example, spray coating, or immersion.

When the positive electrode active material includes nickel (Ni) as a ternary lithium transition metal oxide such as NCA or NCM, a capacity density of the all-solid-state battery 10 may increase to reduce metal elution from the positive electrode active material in a charged state. Therefore, the all-solid-state battery 10 may improve in cycle characteristics in a charged state. The language "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The positive electrode active material may have, for example, a spherical or oval particulate shape.. There is no limitation on a particle diameter and an amount of the positive electrode active material.

The solid electrolyte may include a sulfide-based solid electrolyte with desired or improved lithium ionic conductivity. The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂₋LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is one of Ge, Zn, and Ga), Li₂S-GeS₂, Li₂S-SiS₂-Li₃PO₄, Li₂S-SiS₂-LiₚMO_{q} (where p and q are each a positive integer, and "M" is one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2).

The sulfide-based solid electrolyte may be or include an argyrodite-type compound including, for example, at least one of Li₇₋ₓPS₆₋ₓClₓ (where 0 ≤ x ≤2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I. The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery, and to hinder or prevent a solid electrolyte layer from undergoing short-circuit and penetration caused by the formation of lithium dendrites. The solid electrolyte may have an elastic modulus in a range of, for example, ≥ 15 GPa to ≤ 35 GPa.

The solid electrolyte included in the positive electrode active material layer 120 may have a medium-sized average particle diameter (D₅₀) that is less than the average particle diameter of a solid electrolyte included in the solid electrolyte layer 300. For example, the medium-sized average particle diameter (D₅₀) of the solid electrolyte in the positive electrode active material layer 120 may be about equal to or less than about 90%, 80%, 70%, 60%, 50%, 40%, 30%, or 20% of the medium-sized average particle diameter (D₅₀) of a solid electrolyte included in the solid electrolyte layer 300. The average particle diameter (D₅₀) may be a median diameter measured with a laser-type particle size distribution analyzer.

The positive electrode active material layer 120 may include a conductive material. The conductive material may exhibit conductivity, without causing chemical change of the all-solid-state battery 10, to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres the positive electrode active material, the solid electrolyte, and the conductive material included in the positive electrode active material layer 120 together, and that improves adhesion between the positive electrode active material layer 120 and the positive electrode current collector 110. For example, the binder may include at least one of polyvinylidenefluoride, styrene-butadiene rubber (SBR), polytetrafluoroethylene, vinylidenefluoride/hexafluoropropylene copolymer, polyacrylonitrile, or polymethyl methacrylate.

In the positive electrode active material layer 120, the positive electrode active material may be included in an amount in a range of ≥ 85 parts by weight to ≤ 92 parts by weight relative to total 100 parts by weight of the positive electrode active material, the solid electrolyte, the conductive material, and the binder. The binder may be included in an amount in a range of ≥ 0.5 parts by weight to ≤ 1.5 parts by weight in the positive electrode active material layer 120.

In the positive electrode active material layer 120, the conductive material may be present in an amount in a range of ≥ 1 part by weight to ≤ 50 parts by weight relative to 100 parts by weight of the solid electrolyte. When the conductive material is present in an amount that is less than about 1 part by weight relative to 100 parts by weight of the solid electrolyte, the positive electrode active material layer 120 may decrease in electrical conductivity. When the conductive material is present in an amount that is greater than about 50 parts by weight relative to 100 parts by weight of the solid electrolyte, a proportion of the conductive material may be substantially increased to cause incomplete formation of a coating layer that covers a surface of the solid electrolyte.

According to some example embodiments, the positive electrode active material layer 120 may further include at least one additive such as or including at least one of a filler, a coating agent, a dispersant, and an ionic conductivity agent, in addition to the positive electrode active material, the solid electrolyte, the conductive material, and the binder.

The solid electrolyte layer 300 may be disposed between the positive electrode 100 and the negative electrode 200, and may include a sulfide-based solid electrolyte with desired or improved lithium ionic conductivity. The solid electrolyte included in the solid electrolyte layer 300 may include a material that is the same as, or different from, the material of the solid electrolyte included in the positive electrode active material layer 120.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, or polyethylene, but the present disclosure is not limited thereto. The binder of the solid electrolyte layer 300 may be the same as, or different from, the binder of the positive electrode active material layer 120 or the binder of a negative electrode coating layer 220 which is discussed below.

The negative electrode 200 may include a negative electrode current collector 210, and a negative electrode coating layer 220 on the negative electrode current collector 210. The negative electrode current collector 210 may provide a reference surface on which the negative electrode coating layer 220 is disposed. The negative electrode current collector 210 may include a material that does not react, or substantially react, with lithium, for example, a material that does not form an alloy or a compound with lithium. For example, the negative electrode current collector 210 may include at least one metal such as or including at least one of copper (Cu), stainless steel, titanium (Ti), iron (Fe), cobalt (Co), and nickel (Ni). For example, a thickness of the negative electrode current collector 210 may range from ≥ 1 µm to ≤ 20 µm, from ≥ 5 µm to ≤ 15 µm, or from ≥ 7 µm to ≤ 10 µm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may be configured to induce growth of lithium metal between the negative electrode coating layer 220 and the negative electrode current collector 210 when the all-solid-state battery 10 is charged. The negative electrode coating layer 220 may be configured as a protection layer for lithium metal, and may simultaneously or contemporaneously reduce or suppress precipitation and growth of lithium dendrites.

The negative electrode coating layer 220 may include metal and carbon. For example, the negative electrode coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon such as or including at least one of carbon black, acetylene black, furnace black, ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one additive such as or including at least one of, for example, a binder, a filler, a coating agent, a dispersant, and an ionic conductivity agent.

The negative electrode coating layer 220 may have a thickness that is less than the thickness of the positive electrode active material layer 120. For example, the negative electrode coating layer 220 may have a thickness that is equal to or less than about 50%, 40%, 30%, 20%, 10%, or 5% of the thickness of the positive electrode active material layer 120. The negative electrode coating layer 220 may have a thickness in a range of, for example, ≥ 1 µm to ≤ 20 µm, ≥ 2 µm to ≤ 10 µm, or ≥ 3 µm to ≤ 7 µm. When the negative electrode coating layer 220 has a substantially small thickness, lithium dendrites formed between the negative electrode coating layer 220 and the negative electrode current collector 210 may collapse the negative electrode coating layer 220 and as a result reduce cycle characteristics of the all-solid-state battery 10. When the negative electrode coating layer 220 has a substantially large thickness, the all-solid-state battery 10 may have a decreased energy density and an increased internal resistance caused by the negative electrode coating layer 220, thereby reducing cycle characteristics of the all-solid-state battery 10.

Although not shown, a carbon layer may further be included to increase adhesion between the negative electrode coating layer 220 and the solid electrolyte layer 300.

FIG. 2 is a cross-sectional view illustrating an all-solid-state battery 10 according to an embodiment of the present disclosure.

Referring to FIG. 2, the solid electrolyte layer 300 may include a positive electrode solid electrolyte layer 310 and a negative electrode solid electrolyte layer 320. The positive electrode solid electrolyte layer 310 may be adjacent to the positive electrode 100, and the negative electrode solid electrolyte layer 320 may be adjacent to the negative electrode 200. Each of, or at least one of, the positive and negative electrode solid electrolyte layers 310 and 320 may include the solid electrolyte discussed above.

The positive electrode solid electrolyte layer 310 and the negative electrode solid electrolyte layer 320 may have different thicknesses from each other. The positive electrode solid electrolyte layer 310 may have a first thickness TK1, and the negative electrode solid electrolyte layer 320 may have a second thickness TK2. The first thickness TK1 may be greater than the second thickness TK2. For example, the first thickness TK1 may be in a range of ≥ two times to ≤ one hundred times the second thickness TK2.

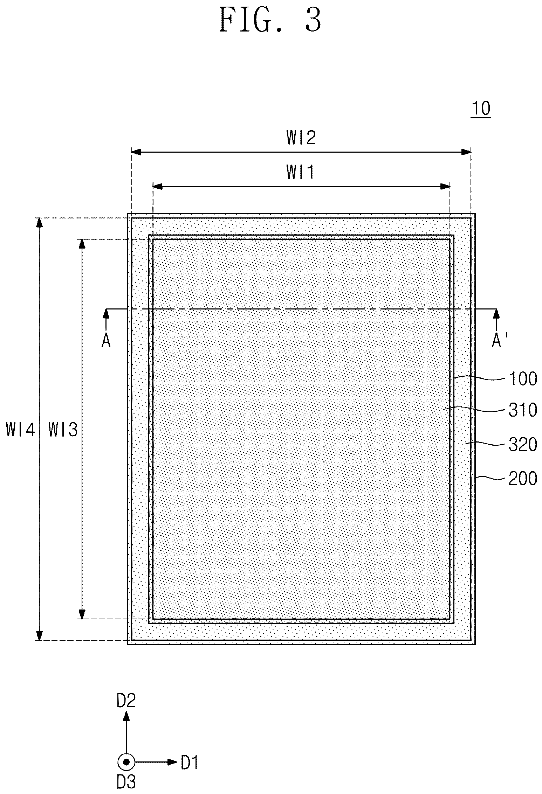

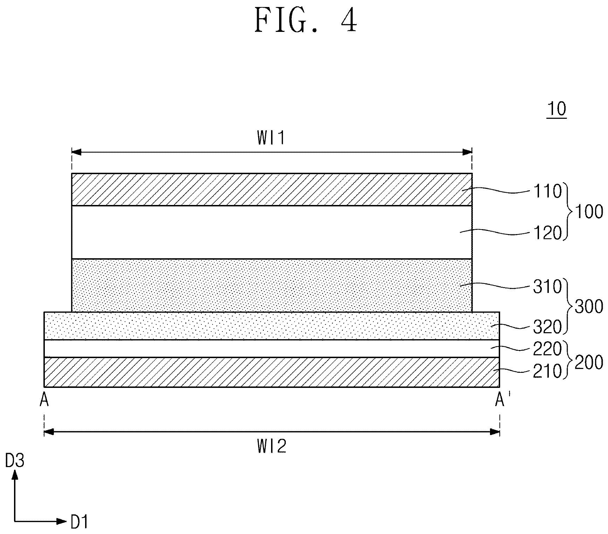

FIG. 3 is a plan view illustrating an all-solid-state battery 10 according to an example embodiment of the present disclosure. FIG. 4 is a cross-sectional view taken along line A-A' of FIG. 3. In the example embodiment that follows, a detailed description of technical features that is redundant to the description of the technical features discussed above with reference to FIGS. 1 and 2 is omitted, and a difference thereof is discussed in detail.

Referring to FIGS. 3 and 4, an area of the positive electrode 100 may be different from an area of the negative electrode 200. For example, the area of the negative electrode 200 may be greater than the area of the positive electrode 100. The positive electrode 100 may be completely encompassed within the negative electrode 200 in the plan view.

In an example embodiment of the present disclosure, the positive electrode solid electrolyte layer 310 may have substantially the same area as the positive electrode 100. The negative electrode solid electrolyte layer 320 may have substantially the same area as the negative electrode 200.

For example, the positive electrode solid electrolyte layer 310 may have a first width WI1 in a first direction D1. The negative electrode solid electrolyte layer 320 may have a second width WI2 in the first direction D1. The first width WI1 may be less than the second width WI2. The positive electrode solid electrolyte layer 310 may have a third width WI3 in a second direction D2. The negative electrode solid electrolyte layer 320 may have a fourth width WI4 in the second direction D2. The third width WI3 may be less than the fourth width WI4.

The all-solid-state battery 10 according to the example embodiment may be fabricated by forming a first stack of the positive electrode 100 and the positive electrode solid electrolyte layer 310, forming a second stack of the negative electrode 200 and the negative electrode solid electrolyte layer 320, and then laminating the first stack and the second stack.

The following describes in detail an all-solid-state battery according to some example embodiments of the present disclosure, and a positive electrode included in the all-solid-state battery. In the example embodiment that follows, a detailed description of technical features that is redundant to the description of the technical features discussed above with reference to FIGS. 1 to 4 is omitted, and a difference thereof is discussed in detail.

FIG. 5 is a cross-sectional view illustrating a positive electrode for an all-solid-state battery according to an example embodiment of the present disclosure. Referring to FIG. 5, a positive electrode for an all-solid-state battery according to an example embodiment of the present disclosure may include a positive electrode current collector COL1 and a positive electrode active material layer AML stacked on the positive electrode current collector COL1. The positive electrode active material layer AML and the positive electrode current collector COL1 of FIG. 5 may be substantially the same as, or similar to, the positive electrode active material layer 120 and the positive electrode current collector 110 illustrated in FIGS. 1 to 4.

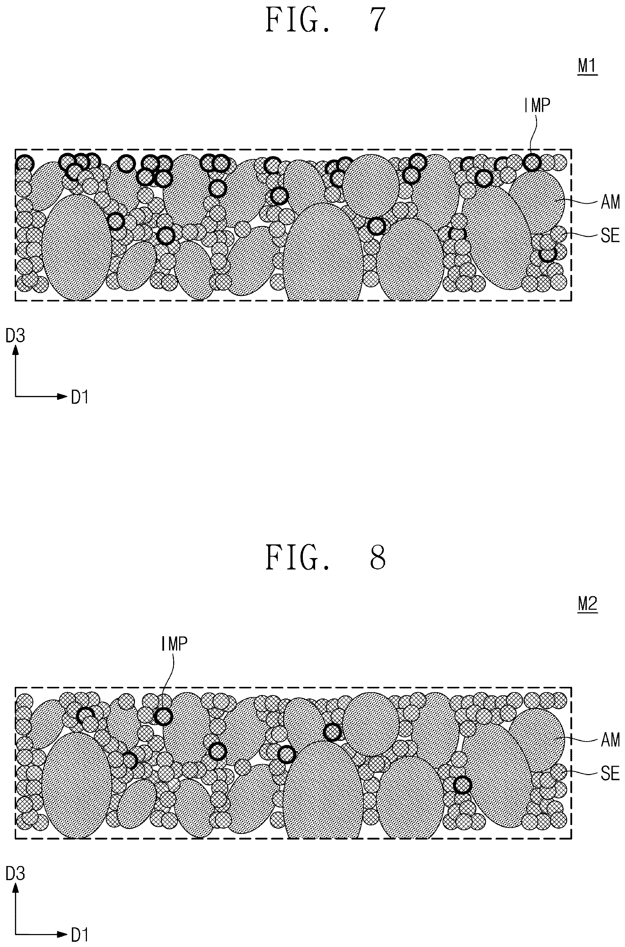

The positive electrode active material layer AML may include a solid electrolyte (see SE of FIG. 7). The solid electrolyte SE may be the same as the solid electrolyte discussed in FIG. 1, or substantially the same as or similar to the solid electrolyte discussed in FIG. 1. The positive electrode active material layer AML may include a surface section SL and a deep section DL.

The surface section SL may refer to a top end portion of the positive electrode active material layer AML. The top end portion of the positive electrode active material layer AML may indicate a distal end in a third direction D3 based on FIG. 5. A depth (see SLD of FIG. 6) of the surface section SL may denote a range of ≥ 1 µm to ≤ 30 µm, or ≥ 10 µm to ≤ 20 µm, away from a surface of the positive electrode active material layer AML. The surface section SL may refer to a side of the positive electrode active material layer AML where the positive electrode active material layer AML is in contact with air. Thus, particles of the solid electrolyte (see SE of FIG. 7) included in the surface section SL may be in contact with air. The particles of the solid electrolyte (see SE of FIG. 7) in contact with air may include lithium impurities (see IMP of FIG. 7).

The deep section DL may refer to a portion other than the surface section SL of the positive electrode active material layer AML. The deep section DL may refer to a side where the positive electrode active material layer AML is not in contact with air. A depth (see DLD of FIG. 6) of the deep section DL may be in a range of≥ 20 µm to ≤ 100 µm, ≥ 30 µm to ≤ 100 µm, or ≥ 35 µm to ≤ 100 µm, away from the surface of the positive electrode active material layer AML.

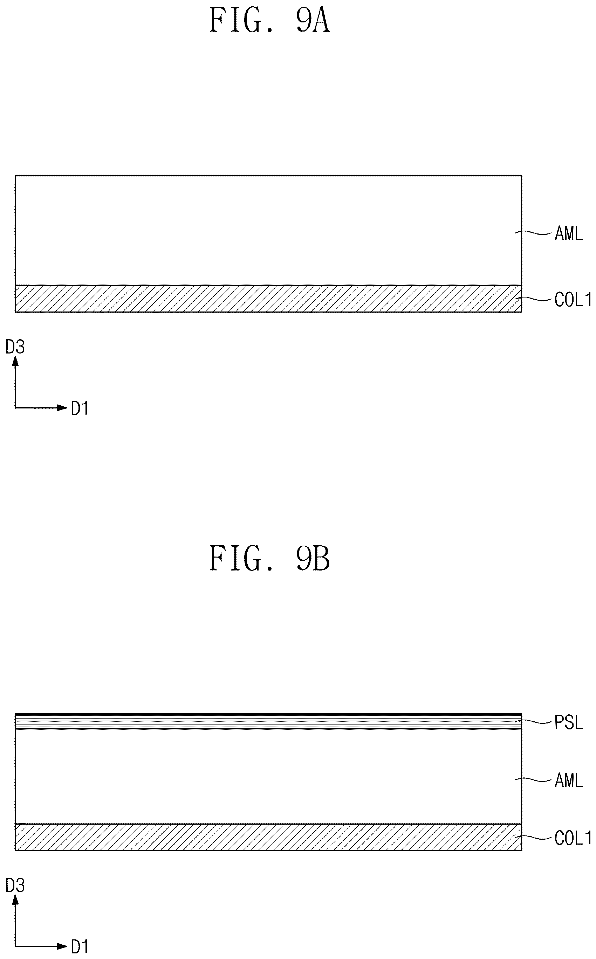

The surface section SL of the positive electrode active material layer AML may include lithium impurities (see IMP of FIG. 7). The lithium impurities IMP may include at least one of lithium carbonate (Li₂CO₃), lithium hydroxide (LiOH), lithium sulfate (Li₂SO₄), and lithium nitrate (LiNO₃). The lithium impurities IMP may be included in a passivation layer PSL, which is discussed below with reference to FIG. 9B.

The lithium impurities IMP of the surface section SL may be present in an amount in a range of ≥ 100 ppm to ≤ 1,000 ppm, ≥ 200 ppm to ≤ 800 ppm, or ≥ 300 ppm to ≤ 700 ppm. In cases where the amount of lithium impurities IMP in the surface section SL is less than the above range, it may be practically difficult to manufacture. In addition, when the amount of lithium impurities IMP in the surface section SL exceeds the above range, the ionic conductivity and electronic conductivity may decrease, and side reactions during charge and discharge may increase.

The lithium impurities IMP of the deep section DL may be present in an amount in a range of ≥ 10 ppm to ≤ 600 ppm, ≥ 20 ppm to ≤ 500 ppm, or ≥ 50 ppm to ≤ 500 ppm. The amount of the lithium impurities IMP in the deep section DL may be less than the amount of the lithium impurities IMP in the surface section SL. The lithium impurities IMP may be produced when the solid electrolyte SE reacts with moisture in air, and the difference in the amount of the lithium impurities IMP may be due to the fact that an area in contact with air decreases toward the deep section DL.

FIG. 6 is a cross-sectional view illustrating a positive electrode active material layer for an all-solid-state battery, according to an example embodiment of the present disclosure. Referring to FIG. 6, the depth SLD of the surface section SL may be different from the depth DLD of the deep section DL.

The depth SLD of the surface section SL may refer to a length from the surface of the positive electrode active material layer AML in a direction opposite to the third direction D3. For example, the phrase "the depth SLD of the surface section SL is 10 µm" may mean that the surface section SL is formed to a depth of 10 µm from the surface of the surface section SL toward the deep section DL.

The depth DLD of the deep section DL may refer to a length from a boundary between the surface section SL and the deep section DL in a direction opposite to the third direction D3. For example, the phrase "the depth DLD of the deep section DL is 80 µm" may mean that the deep section DL is formed to a depth of 80 µm from the boundary between the surface section SL and the deep section DL toward the positive electrode current collector COL1. A ratio of the depth SLD of the surface section SL to the depth DLD of the deep section DL may range from ≥ 0.01 to ≤ 0.5, from ≥ 0.05 to ≤ 0.5, or from ≥ 0.05 to ≤ 0.2.

FIGS. 7 and 8 are enlarged views respectively illustrating sections M1 and M2 depicted in FIG. 6.

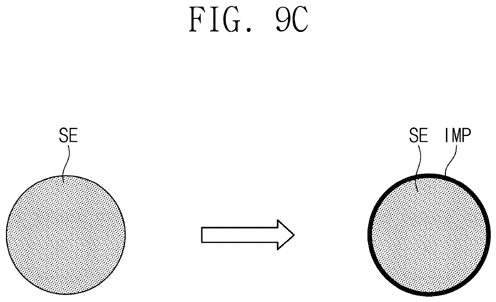

Referring to FIG. 7, the surface section SL of the positive electrode active material layer AML may include a positive electrode active material AM and a solid electrolyte SE. In addition, the solid electrolyte SE may include lithium impurities IMP (see FIG. 9C). For example, the solid electrolyte SE may be present in an active material layer in which a solid electrolyte SE including the lithium impurities IMP is mixed with an ordinary solid electrolyte SE. As shown in FIG. 9C which is discussed below, the solid electrolyte SE including the lithium impurities IMP may have a shape in which the lithium impurities IMP are coated on a particle surface of the solid electrolyte SE. The surface section SL may be in a hardened form by the lithium impurities IMP. The lithium impurities IMP may cause the hardened surface section SL to have an increased degree of hardening. In addition, the lithium impurities IMP may induce an increase in adhesion of the solid electrolyte SE of the surface section SL.

Referring to FIG. 8, as discussed above, the deep section DL of the positive electrode active material layer AML may include a solid electrolyte SE which includes lithium impurities IMP. It may be observed that the solid electrolyte SE on which the lithium impurities IMP are coated has fewer particles compared to FIG. 7. This may be because an amount of the lithium impurities IMP is greater in the surface section SL than in the deep section DL. Although not shown in FIGS. 7 and 8, the surface section SL and the deep section DL included in the positive electrode active material layer AML may further include a conductive material and a binder in addition to the positive electrode active material AM, the solid electrolyte SE, and the lithium impurity IMP. A description of the conductive material and the binder may be the same as the description above with reference to FIGS. 1 to 4.

A weight ratio of the conductive material relative to the total weight of the positive electrode active material layer AML may be in a range of ≥ 1 part by weight to ≤ 10 parts by weight, or ≥ 1 part by weight to ≤ 5 parts by weight. In addition, a weight ratio of the solid electrolyte SE with respect to a total weight of the positive electrode active material layer AML may be in a range of ≥ 10 parts by weight to ≤ 50 parts by weight, or ≥ 10 parts by weight to ≤ 30 parts by weight.

FIGS. 9A and 9B illustrate conceptual diagrams illustrating a passivation layer PSL according to an example embodiment of the present disclosure. Referring to FIG. 9A, the positive electrode active material layer AML may not include the lithium impurities IMP. This may be because the lithium impurities IMP are not included in a positive electrode slurry for forming the positive electrode active material layer AML. In other words, the positive electrode active material layer AML may not include the lithium impurities IMP because the lithium impurities IMP are produced from a reaction between moisture in air and particles of the solid electrolyte SE included in the positive electrode active material layer AML.

Referring to FIG. 9B, a passivation layer PSL including the lithium impurities IMP may be formed on a surface of the positive electrode active material layer AML.

The passivation layer PSL may refer to a layer including the lithium impurities IMP produced from a reaction between the solid electrolyte SE and moisture. In addition, the passivation layer PSL may be or include a portion that covers the surface section SL of the positive electrode active material layer AML. For example, the surface section SL may indicate a surface of the positive electrode active material layer AML after cutting of the passivation layer PSL formed on the surface of the positive electrode active material layer AML. The lithium impurities IMP including the passivation layer PSL may be present in an amount that is equal to or greater than about 1,000 ppm. The passivation layer PSL may be or include a layer which surface is hardened by the lithium impurities IMP. The degree of hardening of the passivation layer PSL may be greater than the degree of hardening of the surface section SL and the deep section DL. Additionally, adhesion of the passivation layer PSL may be greater than the adhesion of the surface section SL and the deep section DL.

The lithium impurities IMP included in the passivation layer PSL may be formed on a particle surface of the solid electrolyte SE. For example, the lithium impurities IMP may be in a coated form on a particle surface of the solid electrolyte SE. This may be because the lithium impurities IMP are produced from a reaction between the solid electrolyte SE and moisture in air.

Referring to FIGS. 7, 8, and 9C, the solid electrolyte SE on which the lithium impurities IMP are coated may be present in the surface section SL and in the deep section DL. In addition, the solid electrolyte SE on which the lithium impurities IMP are coated may be present in the passivation layer PSL.

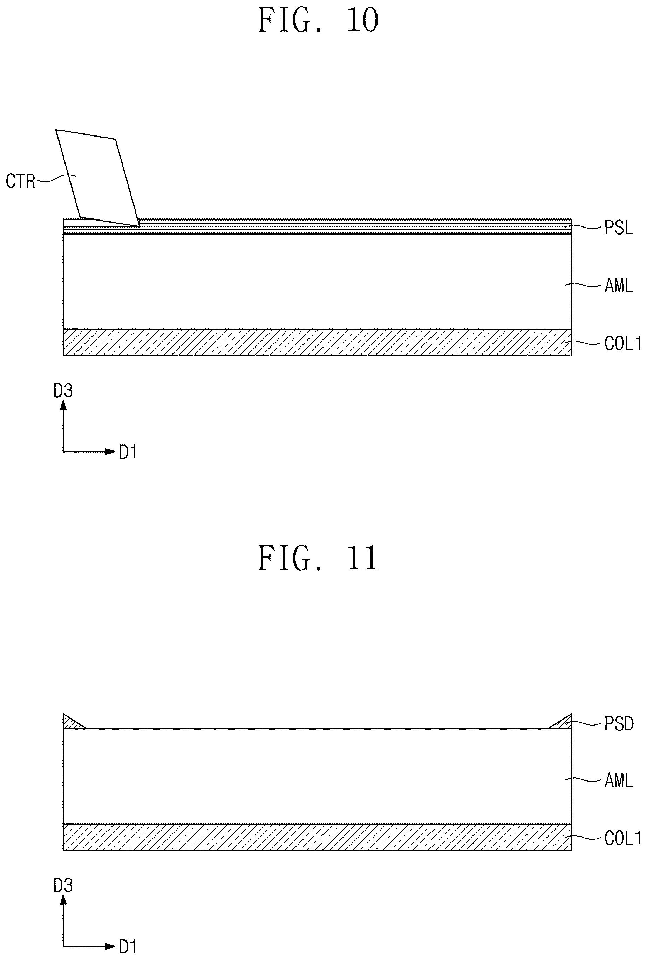

FIG. 10 is a conceptual diagram illustrating cutting of a passivation layer PSL, according to an example embodiment of the present disclosure. A surface and interfacial cutting analysis system (SAICAS) instrument may be utilized to execute the cutting of the passivation layer PSL. The SAICAS instrument may be an equipment that uses a sharp diamond cutting blade to diagonally cut a thin-film sample from its surface to an interface. The cutting of the passivation layer PSL may refer to scrapping of the passivation layer PSL formed on the surface of the positive electrode active material layer AML. In addition, the cutting of the passivation layer PSL may refer to smoothly cutting a surface of the positive electrode active material layer AML by using a cutting blade CTR. The cutting blade CTR may be a blade included in the SAICAS instrument, but the present disclosure is not limited thereto, and any tool capable of cutting the passivation layer PSL may be used as the cutting blade.

A certain cutting strength or force may be required when the passivation layer PSL is cut with the SAICAS instrument. The SAICAS instrument may measure a cutting strength, a cutting force, or an adhesive force of the passivation layer PSL during the cutting thereof. Experimental data thereof is discussed below in Table 1.

Referring to FIGS. 10 and 11, the passivation layer PSL may be cut and removed by cutting equipment. The lithium impurities IMP may all, or substantially all, be removed from the cut passivation layer PSL, but in practice, the lithium impurities IMP may not be completely cut and removed. For example, since the cutting blade CTR is inserted into and cuts the passivation layer PSL, an edge portion of the passivation layer PSL may remain uncut.

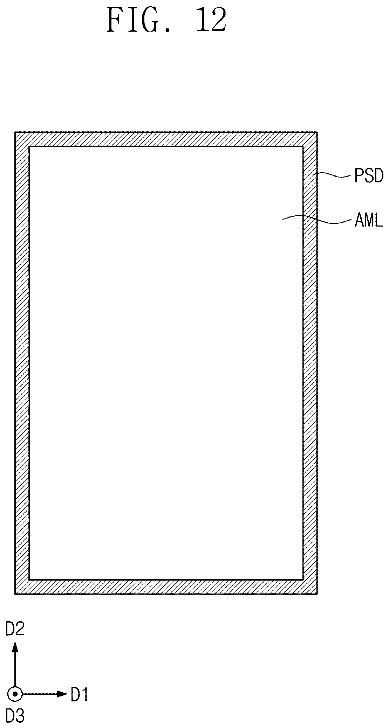

FIGS. 11 and 12 are diagrams illustrating a passivation pattern PSD according to an example embodiment of the present disclosure. Referring to FIGS. 10 and 11, when the passivation layer PSL is cut, there may be uncut portions at opposite ends of the passivation layer PSL. This may be because the cutting blade CTR is required to be inserted for the cutting process to cut the passivation layer PSL present in the surface section SL of the positive electrode active material layer AML with cutting equipment. For example, since the SAICAS instrument performs a diagonal cut on the passivation layer PSL, there may be an uncut portion of the passivation layer PSL on an area where the cutting begins. Thus, it may be necessary to perform the cutting process twice or more to entirely or substantially entirely cut the passivation layer PSL. The residual passivation layer may be positioned on an edge portion of the positive electrode active material layer AML. The edge portion of the positive electrode active material layer AML may indicate opposite distal ends in the first direction D1 based on FIG. 1.

FIG. 12 is a plan view illustrating a positive electrode active material layer that is cut as illustrated in FIG. 11. As discussed in FIG. 11, when the passivation layer PSL is cut, there may be a residual passivation layer PSL which edge portion remains uncut. The residual passivation layer may constitute a passivation pattern PSD. The passivation pattern PSD may refer to an uncut passivation layer PSL with a high amount of the lithium impurities IMP. An amount of the lithium impurities IMP in the passivation pattern PSD may range from ≥ 1,000 ppm to ≤ 3,000 ppm, from ≥ 1,000 ppm to ≤ 2,000 ppm, or from ≥ 1,000 ppm to ≤ 1,500 ppm. The passivation pattern PSD may have a form where the residual passivation layer is present irregularly. In another example, the passivation pattern PSD may have a form where the residual passivation layer is arranged regularly, but the present disclosure is not limited thereto. A cutting process may have to be performed twice or more to remove the passivation pattern PSD. When a cutting process is performed twice or more, unnecessary additional steps may be added to a fabrication process of a positive electrode for an all-solid-state battery, and thus manufacturing cost and time may increase when fabricating a positive electrode or an all-solid-state battery. In contrast, even when the passivation pattern PSD is present, an ionic conductivity and electrical conductivity of a positive electrode plate may show a negligible difference when compared to an electrode plate where the passivation pattern PSD is absent. Accordingly, the formation of the passivation pattern PSD may provide advantages in mass production.

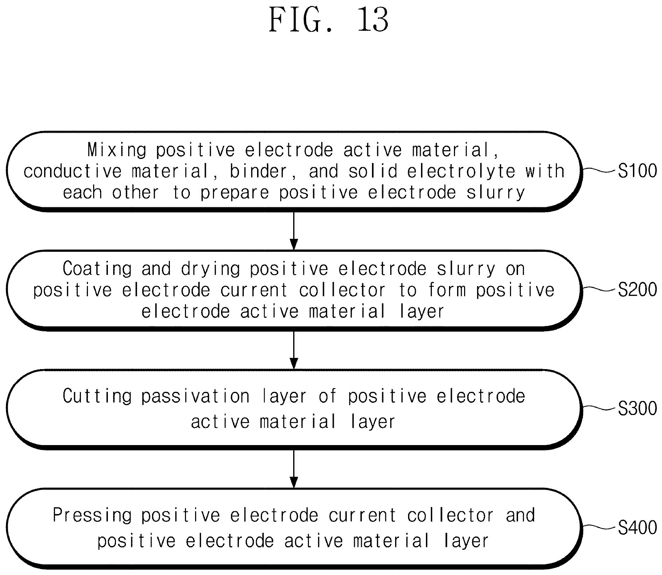

FIG. 13 is a flow chart illustrating a method of manufacturing a positive electrode for an all-solid-state battery according to an example embodiment of the present disclosure. A method of manufacturing a positive electrode for an all-solid-state battery may include mixing a positive electrode active material, a conductive material, a binder, and a solid electrolyte to prepare a positive electrode slurry (S100), coating and drying on a positive electrode current collector the positive electrode slurry to form a positive electrode active material layer (S200), cutting a passivation layer of the positive electrode active material layer (S300), and pressing the positive electrode current collector and the positive electrode active material layer (S400).

The positive electrode active material, the conductive material, the binder, and the solid electrolyte may be substantially the same as, or similar to, the positive electrode active material, the conductive material, the binder, and the solid electrolyte discussed in FIG. 1. The solid electrolyte in the positive electrode slurry may be present in an amount in a range of ≥ 5 parts by weight to ≤ 30 parts by weight, ≥ 5 parts by weight to ≤ 20 parts by weight, or ≥ 10 parts by weight to ≤ 20 parts by weight relative to 100 parts by weight of the positive electrode active material. In addition, the conductive material in the positive electrode slurry may be present in an amount in a range of ≥ 0.05 parts by weight to ≤ 5 parts by weight, ≥ 0.1 parts by weight to ≤ 5 parts by weight, or ≥ 0.1 parts by weight to ≤ 2 parts by weight relative to 100 parts by weight of the positive electrode active material.

The cutting of the passivation layer of the positive electrode active material layer (S300) may include cutting an upper portion of the positive electrode active material layer with a strength in a range of ≥ 0.01 kN/m to ≤ 0.5 kN/m, ≥ 0.05 kN/m to ≤ 0.5 kN/m, or ≥ 0.05 kN/m to ≤ 0.2 kN/m. A SAICAS instrument may measure the cutting strength at the same time as when the cutting process is performed. The cutting of the passivation layer of the positive electrode active material layer may include cutting a central portion of the passivation layer with a difference for an edge portion of the passivation layer. It may be necessary to perform the cutting process twice or more to entirely cut the passivation layer. Thus, to perform the cutting process only one time for simplification of the cutting process, the edge portion of the passivation layer may remain uncut. The uncut edge portion may be removed in a subsequent process in which a positive electrode layer is punched or cut.

The pressing of the positive electrode current collector and the positive electrode active material layer (S400) may include pressing the positive electrode current collector and the positive electrode active material layer stacked on the positive electrode current collector. The pressing may include performing a pressing process that uses a roll press. The present disclosure, however, is not limited to this method, and any pressing process applicable in the art may be included. For example, a pressing process such as hydraulic plate processing and warm isostatic pressing may be performed.

When roll pressing is performed to press the positive electrode current collector and the positive electrode active material layer, the pressure may range from ≥ 1 ton/cm to ≤ 5 tons/cm, for example, from ≥ 1.5 tons/cm to ≤ 4.0 tons/cm, or from ≥ 2 tons/cm to ≤ 3.5 tons/cm. For example, the pressing pressure may be about 3.5 tons/cm.

The pressing process may be performed at relatively high temperatures. For example, the pressing process may be performed at a temperature in a range of ≥ 60°C to ≤ 180°C, ≥ 80°C to ≤ 150°C, or ≥ 100°C to ≤ 130°C.

The following describes some examples and comparative examples of the present disclosure. The following embodiments, however, are merely examples, and the present disclosure is not limited to the embodiments discussed below.

### Embodiment 1

### Manufacture of Positive Electrode

A powder of LiNi_{0.8}Co_{0.15}Mn_{0.05}O₂ (NCM) was prepared as a positive electrode active material. An argyrodite-type solid electrolyte particle (Li₆PS₅Cl) with an average particle diameter (D₅₀) of 1 µm was prepared as a solid electrolyte, polyvinylidene fluoride (PVdF) was prepared as a binder, and carbon nano-tube (CNT) was prepared as a conductive material.

The positive electrode active material, the solid electrolyte, the conductive material, and the binder were mixed in a weight ratio of 85:13.5:0.5:1 in a 2-ethylhexyl acetate solvent to prepare a positive electrode slurry. The positive electrode slurry was coated on an aluminum positive electrode current collector, and then dried and pressed to manufacture a positive electrode plate. A thickness of the positive electrode plate, excluding a substrate, was 104 µm.

A SAICAS instrument was used to cut a surface section of the positive electrode plate coated and dried on the positive electrode current collector, and thus a surface of a positive electrode active material layer was cut to a depth of 10 µm. Then, a cutting strength at the cutting depth was measured. A cutting condition of the SAICAS instrument was a horizontal load of 1 N and a horizontal velocity of 10 µm/sec. In addition, the cutting condition was a vertical load of 1 N and a vertical velocity of 1 µm/sec.

### Embodiment 2

A positive electrode slurry prepared in the same method as in Embodiment 1 was coated on an aluminum positive electrode current collector, and then dried to manufacture a positive electrode plate. A thickness of the positive electrode plate, excluding a substrate, was 103 µm.

A SAICAS instrument was used to cut a surface section of the positive electrode plate coated and dried on the positive electrode current collector, and thus a surface of a positive electrode active material layer was cut to a depth of 10 µm. Then, a cutting strength at the cutting depth was measured. A cutting condition of the SAICAS instrument was a horizontal load of 1 N and a horizontal velocity of 10 µm/sec. In addition, the cutting condition was a vertical load of 1 N and a vertical velocity of 1 µm/sec.

### Embodiment 3

A positive electrode slurry prepared in the same method as in Embodiment 1 was coated on an aluminum positive electrode current collector, and then dried and pressed to manufacture a positive electrode plate. A thickness of the positive electrode plate, excluding a substrate, was 103 µm.

The pressing was performed at 25°C using a press roll whose linear pressure was controlled to ≤ 2.3 tons and in which a gap between upper and lower rolls of the press roll was adjusted to 0, such that the positive electrode was maximally pressed to have a minimum thickness and a high mixture density after the pressing. The positive electrode was manufactured to allow the positive electrode active material disposed on one side of the current collector to have a loading level of 45 mg/cm². After the pressing, the positive electrode plate excluding a substrate had a thickness of 100 µm.

After the pressing, a SAICAS instrument was used such that a surface layer of the positive electrode active material layer was cut to a thickness of 10 µm. Then, a cutting strength at the cutting depth was measured. A cutting condition of the SAICAS instrument was a horizontal load of 1 N and a horizontal velocity of 10 µm/sec. In addition, the cutting condition was a vertical load of 1 N and a vertical velocity of 1 µm/sec.

### Embodiment 4

A positive electrode plate manufactured in the same method as in Embodiment 1 was cut twice on its surface. A cutting condition of the SAICAS instrument was a horizontal load of 1 N and a horizontal velocity of 10 µm/sec. In addition, the cutting condition was a vertical load of 1 N and a vertical velocity of 1 µm/sec.

### Comparative 1

A positive electrode plate was manufactured in the same method as in Embodiment 1, with a difference that a surface layer of the positive electrode plate was not cut.

### Comparative 2

A positive electrode plate was manufactured in the same method as in Embodiment 2, with a difference that a surface layer of the positive electrode plate was not cut.

### Comparative 3

A positive electrode plate was manufactured in the same method as in Embodiment 3, with a difference that a surface layer of the positive electrode plate was not cut.

### Evaluation 1: Adhesion (Cutting Strength) of Surface Section

The positive electrode plates according to Embodiments 1 to 4 and Comparatives 1 to 3 were prepared. The positive electrode plates were cut and prepared to fit a sample holder of a SAICAS instrument.

The SAICAS instrument was set in cutting depth, cutting speed, and feed rate. A sample was mounted on the SAICAS instrument, and a cutting tool was positioned on a surface of the positive electrode plate. The instrument was operated to allow the cutting tool to cut the sample at the set speed and depth. While the cutting tool penetrated a surface of the sample, a required cutting strength was measured in real-time. After the cutting depth reached a target depth, the cutting strength at that depth was monitored and data was recorded.

Multiple points on the sample were cut under the same condition to repeatedly collect data. Three repeated measurements were fulfilled to calculate an average cutting strength, and the calculated average strength was listed in Table 1 below.

**Table 1**

| | Pressing of electrode plate | Mixture thickness (µm) | Cutting strength (kN/m) | | | | |
|---|---|---|---|---|---|---|---|
| | | | Cutting depth (10 µm) | Cutting depth (20 µm) | Cutting depth (30 µm) | Cutting depth (40 µm) | Cutting depth (50 µm) |
| Embodiment 1 | Unpressed | 104 | 0.070 | 0.067 | 0.060 | 0.056 | 0.053 |
| Embodiment 2 | Unpressed | 103 | 0.071 | 0.066 | 0.061 | 0.056 | 0.053 |
| Embodiment 3 | Pressed | 100 | 0.074 | 0.071 | 0.066 | 0.057 | 0.055 |
| Embodiment 4 | Unpressed | 104 | 0.072 | 0.067 | 0.061 | 0.057 | 0.054 |
| Comparative 1 | Unpressed | 104 | 0.135 | 0.071 | 0.068 | 0.061 | 0.057 |
| Comparative 2 | Unpressed | 103 | 0.132 | 0.070 | 0.066 | 0.060 | 0.056 |
| Comparative 3 | Pressed | 100 | 0.164 | 0.075 | 0.070 | 0.068 | 0.059 |

Table 1 shows the cutting strength at the cutting depth of each of the positive electrodes fabricated in Embodiments 1 to 3 and Comparatives 1 to 3. Referring to Table 1, it may be observed that the cutting strength is lower in Embodiments 1 to 3 in each of which the passivation layer is cut than in Comparatives 1 to 3 in each of which the passivation layer is not cut. For example, there is a significant difference in cutting strength when the passivation layer is cut to a depth of 10 µm from a surface thereof. This may indicate that an increase in amount of the lithium impurities in the passivation layer causes an increase in the degree of surface hardening. Therefore, as shown in Embodiments 1 to 3, the degree of surface hardening is reduced when the passivation layer is cut. Accordingly, it may be ascertained that there is a reduction in amount of the lithium impurities on the surface after the passivation layer is cut.

Evaluation 2: Ionic Conductivity and Electronic conductivity of Positive Electrode

The positive electrode plates according to Embodiments 3 and 4 and Comparatives 1 and 3 were prepared. Table 2 below shows the measurement results of electronic conductivity (σ_el) and ionic conductivity (σ_ion) for the positive electrode plate measured through EIS (electrochemical impedance spectroscopy). A single-layered positive electrode plate was punched at 10 pi and assembled into a torque cell, and then was set to 45°C in a thermostatic chamber to execute EIS measurement.

In addition, a constant current was applied to the sample, and then a voltage drop was measured to obtain electronic conductivity. The ionic conductivity and the electronic conductivity measurements were repeated three times, and an average of the repeated measurements was calculated and listed in Table 2 below.

**Table 2:**

| | Ionic conductivity (S/cm) | Electronic conductivity (S/cm) | Electronic conductivity/Ionic conductivity (ratio) |
|---|---|---|---|
| Embodiment 3 | 5.81 E-05 | 3.66 E-04 | 6.29 |
| Embodiment 4 | 6.33 E-05 | 3.31 E-04 | 5.23 |
| Comparative 1 | 5.44 E-05 | 2.64 E-04 | 4.85 |
| Comparative 3 | 5.22 E-05 | 3.48 E-04 | 6.66 |

Table 2 shows the ionic conductivity, the electronic conductivity, and the ratio of the electronic conductivity to the ionic conductivity of each of the positive electrodes manufactured in Embodiments 3 and 4 and Comparative 1 and 3. Referring to Table 2, it may be observed that Embodiments 1 and 3 where the passivation layer is cut have high ionic conductivity and electronic conductivity. It may be estimated that this is because the cutting of the passivation layer with a high amount of the lithium impurities causes a reduction in amount of resistive material which hinders migration of ions or electrons. Accordingly, the hardened passivation layer on a surface of the positive electrode may be cut to improve the ionic conductivity and the electronic conductivity of the positive electrode plate.

### Evaluation 3: Surface Roughness

The positive electrode plates according to Embodiments 1, 3, and 4 and Comparatives 1 and 3 were prepared. A laser scanning con-focal microscopy (LSCM) analysis was executed to compare a surface roughness of the positive electrode plate. The surface roughness measurement was executed on a prepared sample, and multiple points on a surface of the sample were scanned under the same condition to repeatedly collect data. An arithmetical mean roughness (Sa) on the measured surface was obtained by performing three repeated measurements, and an average surface roughness was calculated and listed in Table 3 below.

**Table 3:**

| | Cutting depth of passivation layer (µm) | Pressing of electrode plate | Arithmetical mean roughness (Sa) (µm) |
|---|---|---|---|
| Embodiment 1 | 10 | Unpressed | 4.454 |
| Embodiment 3 | 10 | Pressed | 4.065 |
| Embodiment 4 | 10 | Unpressed | 4.418 |
| Comparative 1 | - | Unpressed | 5.459 |
| Comparative 3 | - | Pressed | 5.144 |

Table 3 shows measured surface roughness values of Embodiments 1, 3, and 4 and Comparatives 1 and 3. Referring to Table 3, the surface roughness of Embodiments 1, 3, and 4 where the passivation layer is cut is less than the surface roughness of Comparatives 1 and 3. It may be estimated that this is because a surface of the positive electrode active material layer is smoothly cut due to the cutting of the passivation layer. In addition, a surface roughness of the passivation pattern created in the cutting process is less than the surface roughness of Comparatives 1 and 3 where the cutting process was not performed. The surface roughness of the cut surfaces even with the presence of the passivation pattern is less than the surface roughness of the uncut surfaces.

### Evaluation 4: Amount of Lithium Impurity

An amount of lithium impurities on a surface of each of the positive electrodes manufactured in Embodiment 3 and Comparative 3 was measured. For measurement of the amount of lithium impurities, samples were taken from the positive electrodes at depths of 10 µm, 20 µm, and 30 µm of Embodiment 3 and Comparative 3, and then finely crushed to prepare a homogeneous powder. The samples underwent a neutralization titration method to measure an amount of Li₂CO₃. The amount of Li₂CO₃ measured through neutralization titration analysis was listed in Table 4 below.

**Table 4:**

| | Li₂CO₃ amount (ppm) | | |
|---|---|---|---|
| | Cutting depth (10 µm) | Cutting depth (20 µm) | Cutting depth (30 µm) |
| Embodiment 3 | 570 | 280 | 180 |
| Comparative 3 | 1050 | 530 | 260 |

Referring to Table 4, the amount of Li₂CO₃ in the surface section of Embodiment 3 is less than the amount of Li₂CO₃ in the deep section of Embodiment 3. The amount of Li₂CO₃ in the surface section of Embodiment 3 is less than the amount of Li₂CO₃ in the surface section of Comparative 3. It may be estimated that this is because the cutting of the passivation layer removes the hardened lithium impurities on the surface of the positive electrode.

In a positive electrode and an all-solid-state battery including the positive electrode according to the present disclosure, a hardened surface portion of a positive electrode active material layer may be eliminated, or substantially eliminated, to improve ionic conductivity.

A method of manufacturing a positive electrode for an all-solid-state battery according to the present disclosure may have a low manufacturing difficulty and allow for mass production.

Although some example embodiments of the present disclosure are discussed with reference to accompanying figures, it is understood that various changes in form and details may be made therein without departing from the spirit and scope of the present disclosure. It therefore is understood that the example embodiments described above are just illustrative but not limitative in all aspects.

## Claims

1. A positive electrode (100) for an all-solid-state battery (10), the positive electrode (100) comprising:
a positive electrode current collector (110); and
a positive electrode active material layer (120) on the positive electrode current collector (110),
wherein the positive electrode active material layer (120) comprises a positive electrode active material and a solid electrolyte,
wherein the positive electrode active material layer (120) comprises a surface section and a deep section,
wherein an amount of lithium impurities in the surface section is greater than an amount of lithium impurities in the deep section, and
wherein the amount of lithium impurities in the surface section is in a range of ≥ 300 ppm to ≤ 700 ppm.

2. The positive electrode (100) of claim 1, wherein the lithium impurities comprise at least one of lithium carbonate (Li₂CO₃), lithium hydroxide (LiOH), lithium sulfate (Li₂SO₄), and lithium nitrate (LiNO₃).

3. The positive electrode (100) of claim 1 or 2, wherein the amount of lithium impurities in the deep section is in a range of ≥ 50 ppm to ≤ 500 ppm.

4. The positive electrode (100) of any of the claims 1 to 3, wherein a ratio of electrical conductivity of the positive electrode active material layer (120) to ionic conductivity of the positive electrode active material layer (120) is in a range of ≥ 5 to ≤ 6.5.

5. The positive electrode (100) of any of the claims 1 to 4, wherein the surface section comprises a passivation layer at opposite ends thereof.

6. The positive electrode (100) of any of the claims 1 to 5, wherein the surface section has a depth in a range of≥ 10 µm to ≤ 20 µm from a surface of the positive electrode active material layer (120),
wherein a ratio of the depth of the surface section to a depth of the deep section is in a range of ≥ 0.05 to ≤ 0.2.

7. An all-solid-state battery (10), comprising:
a positive electrode (100);
a negative electrode (200); and
a solid electrolyte layer between the positive electrode (100) and the negative electrode (200),
wherein the positive electrode (100) comprises:
a positive electrode current collector (110); and
a positive electrode active material layer (120) on the positive electrode current collector (110),
wherein the positive electrode active material layer (120) comprises a positive electrode active material and a solid electrolyte,
wherein a surface of the positive electrode active material layer (120) comprises a passivation pattern on at least one side of the surface of the positive electrode active material layer (120), and
wherein an amount of lithium impurities in the passivation pattern is greater than an amount of lithium impurities on the surface of the positive electrode active material layer (120).

8. The all-solid-state battery (10) of claim 7, wherein the amount of lithium impurities in the passivation pattern is in a range of ≥ 1,000 ppm to ≤ 1,500 ppm.

9. The all-solid-state battery (10) of claim 7 or 8, wherein the positive electrode active material layer (120) comprises a surface section and a deep section,
wherein the surface section has a depth in a range of ≥ 10 µm to ≤ 20 µm from a surface of the positive electrode active material layer (120), and
wherein a ratio of the depth of the surface section to a depth of the deep section is in a range of ≥ 0.05 to ≤ 0.2.

10. A method of manufacturing a positive electrode (100) for an all-solid-state battery (10), the method comprising:
mixing a positive electrode active material, a conductive material, a binder, and a solid electrolyte to prepare a positive electrode slurry;
coating and drying, on a positive electrode current collector (110), the positive electrode slurry to form a positive electrode active material layer (120);
cutting a passivation layer of the positive electrode active material layer (120); and
pressing the positive electrode current collector (110) and the positive electrode active material layer (120) where the passivation layer is cut,
wherein the passivation layer comprises a lithium impurity produced from a reaction between atmosphere and the solid electrolyte in the positive electrode active material layer (120).

11. The method of claim 10, wherein cutting the passivation layer of the positive electrode active material layer (120) comprises allowing an upper portion of the positive electrode active material layer (120) to be cut with a strength in a range of ≥ 0.05 kN/m to ≤ 0.2 kN/m.

12. The method of claim 10 or 11, wherein cutting the passivation layer of the positive electrode active material layer (120) comprises cutting a central portion of the passivation layer except for an edge portion of the passivation layer.

13. The method of any of the claims 10 to 12, wherein cutting the passivation layer of the positive electrode active material layer (120) comprises cutting an upper portion of the positive electrode active material layer (120) to a depth in a range of ≥ 5 µm to ≤ 20 µm.

14. The method of any of the claims 10 to 13, wherein the solid electrolyte is present in an amount in a range of ≥ 10 parts by weight to ≤ 20 parts by weight relative to 100 parts by weight of the positive electrode active material.

15. The method of any of the claims 10 to 14, wherein the lithium impurity comprises at least one of lithium carbonate (Li₂CO₃), lithium hydroxide (LiOH), lithium sulfate (Li₂SO₄), and lithium nitrate (LiNO₃).
